# EUROPEAN PATENT SPECIFICATION

(11) **EP 1 237 944 B1**
(45) Date of publication and mention of the grant of the patent: **10.03.2004**
(21) Application number: 00956691.0
(22) Date of filing: 30.08.2000
(51) Int. Cl.: C08F 6/00, C08F 14/06, B01D 53/46

(54) **METHOD OF ELIMINATING MALODOURS FROM GASES**
VERFAHREN ZUR ENTFERNUNG VON GERÜCHEN AUS GASEN
ELIMINATION DES MAUVAISES ODEURS DES GAZ

(30) Priority: 24.11.1999 US 448785
(43) Date of publication of application: 11.09.2002
(73) Proprietor: OCCIDENTAL CHEMICAL CORPORATION, Dallas, TX 75244-6119 (US)
(72) Inventor: BRANDT, Daniel, J., Pottstown, PA 19464 (US)
(74) Representative: Frankland, Nigel Howard
(86) International application number: PCT/GB2000/003340
(87) International publication number: WO 2001/038406

(56) References cited:
- EP-A- 0 709 125
- DE-A- 3 505 238

## Description

This invention relates to a method of eliminating foul-smelling odours from gases.

In manufacturing poly(vinylchloride) (PVC) by an emulsion process, an emulsion of PVC particles in water is sprayed into warm air to evaporate the water and dry the resulting PVC particles. A fan forces huge volumes of this air through a drying system, which trap the PVC particles, and the air is then released into the atmosphere. This air can have an objectionable odour and its release may generate complaints from people in the vicinity. Companies making PVC are often being required to de-odorize this air. Deodorizers tested have not been found to be effective and scrubbers, though probably effective, cost many millions of dollars to install and operate.

According to one aspect of this invention there is provided a method of making poly(vinylchloride) using a C₁₀ to C₁₈ fatty acid salt, where said poly(vinylchloride) is dried in air, and said air is released to the atmosphere, and said air is malodorous, the method of including the step of reducing the malodorousness of the air, where said malodour is due to the presence of C₁₀ to C₁₈ fatty acid in said air, by spraying into said air an aqueous solution containing at least a stoichiometric amount of a base that reacts with said C₁₀ to C₁₈ fatty acid to produce a salt.

In one embodiment said odour is due to the presence of a C₁₀ to C₁₄ saturated aliphatic fatty acid in said air.

In a specific embodiment said odour is due to the presence of lauric acid in said air.

Preferably said base is selected from the group consisting of sodium carbonate, sodium bicarbonate, potassium carbonate, potassium bicarbonate, sodium hydroxide, potassium hydroxide and mixtures thereof.

Conveniently said base is sodium carbonate.

Advantageously the concentration of said base in said aqueous solution is about 0.05 wt% to about saturation.

Conveniently the concentration of said base in said aqueous solution is about 0.02 to about 1.0 wt%.

Preferably the amount of said base is about 2 to about 4 times stoichiometric.

Advantageously said aqueous solution is atomized.

Conveniently the concentration of said fatty acid in said air is less than 100 ppm.

Preferably the volume of said air is at least 283m³/min (10,000 SCFM).

According to another aspect of this invention there is provided a process for making poly(vinylchloride) wherein an ammonium salt of lauric acid, palmitic acid, or stearic acid is used as a surfactant in manufacturing a poly(vinylchloride) aqueous emulsion and said aqueous emulsion is sprayed into warm air to dry said polyvinyl(chloride), the process including the step of rendering said air less malodourous by spraying into said air an aqueous solution containing about 2 to about 4 times the amount of a base that is needed to react with any lauric acid, palmitic acid, or stearic acid in said air.

Conveniently said ammonium salt is ammonium laurate.

Preferably said base is sodium carbonate.

Conveniently the concentration of said base in said aqueous solution is about 0.2 to about 1.0 wt%.

Advantageously said aqueous solution is atomized.

Preferably said base is selected from the group consisting of sodium carbonate, sodium bicarbonate, potassium carbonate, potassium bicarbonate, sodium hydroxide, potassium hydroxide and mixtures thereof.

Conveniently the concentration of said lauric acid, palmitic acid, or stearic acid in said air is less than 100 ppm.

Preferably the volume of said warm air is at least 283m³ /min (10,000 SCFM).

The invention also relates to a method of making poly(vinylchloride) comprising
(A) polymerising vinyl chloride monomer in an emulsion micro-suspension polymerisation process to produce an emulsion containing particles of poly(vinylchloride);
(B) adding ammonium laurate to said emulsion;
(C) spraying said emulsion into warm air, whereby lauric acid is formed;
(D) passing said warm air through a poly(vinyl chloride) drying system; and
(E) spraying into said warm air from said drying system an aqueous solution of about 0.05 to about 1.0 wt% sodium carbonate containing about 2 to about 4 times the amount of sodium carbonate needed to stoichiometrically react with said lauric acid.

The source of the objectionable odour in drying gases from certain PVC polymers is fatty acid. Fatty acid is formed from an ammonium fatty acid salt, which is used in the PVC polymerisation process as a surfactant. Although the fatty acid is present in only ppm (parts per million, by weight) concentrations, it can be detected by a human being having a nose of average sensitivity, at ppb (parts per billion, by weight) concentrations.

Spraying with a basic solution costs very little to implement and operate, is safe to handle, and does not add harmful chemicals to the environment.

The invention will now be described, by way of example.

This invention is applicable to gases containing C₁₀ to C₁₈ fatty acids and it is particularly applicable to gases containing C₁₀ to C₁₄ saturated aliphatic fatty acids. Examples of such acids include lauric acid, palmitic acid, and stearic acid. The invention is most useful if the concentration of the fatty acid in the gas is less than about 100 ppm as other methods may not be suitable at those low concentrations. The invention is also most useful for treating very large volumes of gas, such as more than 283m³ (10,000 SCFM) as other methods are too expensive to handle so much gas.

Into the gas to be de-odorized is sprayed an aqueous solution of a base that will react with the fatty acid to form a salt. Examples of bases that can be used include sodium carbonate, sodium bicarbonate, potassium carbonate, potassium bicarbonate, sodium hydroxide, potassium hydroxide, calcium hydroxide, and mixtures thereof. The preferred base is sodium carbonate because it has been found to be very effective and it is inexpensive and safe to use. The concentration of the solution should be about 0.05 wt% to saturation as lower concentrations may be less effective; preferably, the concentration is about 0.2 to about 1.0 wt%. At least a stoichiometric amount of base should be used, but more than about 7 times stoichiometric is usually unnecessary. To ensure that all or almost all of the fatty acid is reacted without using excess base, it is preferable to use about 2 to about 4 times the stoichiometric amount of base. The solution should be sprayed into the air to be treated in a finely-divided form, preferably atomized.

The following examples further illustrate this invention:

### Example 1

The stack gas emanating from a commercial PVC manufacturing plant in which an ammonium laurate surfactant was used in a vinyl chloride emulsion micro-suspension polymerisation process was found to contain 5.6 to 7.3 mg/m³ of lauric acid, 0.6 to 2.3 mg/m³ of cetyl alcohol, and 0.02 to 0.2 mg/m³ of stearyl alcohol. By smelling pure lauric acid, the odour of the stack gas was determined to be primarily due to lauric acid.

### Example 2

A laboratory scale lauric acid emitting stack was constructed to test the effectiveness of various substances in eliminating the odour of lauric acid. The stack was placed in a closed laboratory room and aqueous solutions of various materials were sprayed into the exhaust gas from the stack. After 10 minutes, 5 members of a test panel entered the room to note any odours present. The substances tested and the results are as follows:

| Test | Substance Tested | Concentration | Lauric Acid Odour |
|---|---|---|---|
| 1 | No spray | | Strong |
| 2 | Water spray | " | Strong |
| 3 | "Nalco 1853 Fog"¹ | 200/1 | Less than Test 1 |
| 4 | " | 400/1 | Detectable |
| 5 | " | 800/1 | Detectable |
| 6 | " | 1600/1 | Detectable |
| 7 | " | 300/1 | Detectable |
| 8 | "ECS-2500"² | 100/1 | Less than Test 1 |
| 9 | "ECOSORB"³ | 100/1 | Medium to strong |
| 10 | "Prosweet" OC2526"⁴ | 100/1 | Masked by strong odour of "Prosweet" |
| 11 | "Prosweet" OC2529"⁵ | 100/1 | Strong, and unpleasant odour of "Prosweet" |
| 12 | Na₂CO₃ | 0.2%, pH 10.9 | None |
| 13 | " | 0.1%, pH10.5 | Very slight |
| 14 | " | 0.05%, pH 9.8 | Slight |
| 15 | NaHCO₃ | 0.2% | Detectable |
| 16 | " | 0.4% | Less than Test 14 |

| | | | |
|---|---|---|---|
| 1. Proprietary blend of essential (natural) oils, sold by Odour Control Technology | | | |
| 2. Proprietary blend of essential (natural) oils, sold by Environmental Control | | | |
| 3. Proprietary material sold by Odour Management, Inc. | | | |
| 4. Proprietary material sold by Betz Dearborn | | | |
| 5. Proprietary material sold by Betz Dearborn | | | |

### Example 3

At a large PVC manufacturing plant where ammonium laurate was used as a surfactant, the stack air flow was about 1700 m³/min (60,000 SCFM) and the lauric acid in the stack emissions ranged from 0.057 to 0.74 kg/hr 1.26 to 1.64 Ib/hr. A nozzle was inserted into the exhaust stack before the fan and 0.068 kg/min (0.15 lb/min) of a 5 wt% aqueous solution of sodium carbonate was sprayed in atomized form into the stack gas through the nozzles. Over a three month period, complaints about odours from persons in the vicinity declined by 75%, compared to the same period the previous year.

In the present specification "comprise" means "includes or consists of" and "comprising" means "including or consisting of".

The features disclosed in the foregoing description, or the following Claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of making poly(vinylchloride) using a C₁₀ to C₁₈ fatty acid salt, where said poly(vinylchloride) is dried in air, and said air is released to the atmosphere, and said air is malodorous, the method of including the step of reducing the malodorousness of the air, where said malodour is due to the presence of C₁₀ to C₁₈ fatty acid in said air, by spraying into said air an aqueous solution containing at least a stoichiometric amount of a base that reacts with said C₁₀ to C₁₈ fatty acid to produce a salt.

2. A method according to Claim 1 wherein said odour is due to the presence of a C₁₀ to C₁₄ saturated aliphatic fatty acid in said air.

3. A method according to Claim 2 wherein said odour is due to the presence of lauric acid in said air.

4. A method according to any one of the preceding Claims wherein said base is selected from the group consisting of sodium carbonate, sodium bicarbonate, potassium carbonate, potassium bicarbonate, sodium hydroxide, potassium hydroxide, and mixtures thereof.

5. A method according to Claim 4 wherein said base is sodium carbonate.

6. A method according to any one of the preceding Claims wherein the concentration of said base in said aqueous solution is about 0.05 wt% to about saturation.

7. A method according to Claim 6 wherein the concentration of said base in said aqueous solution is about 0.02 to about 1.0 wt%.

8. A method according to any one of the preceding Claims wherein the amount of said base is about 2 to about 4 times stoichiometric.

9. A method according to any one of the preceding Claims wherein said aqueous solution is atomized.

10. A method according to any one of the preceding Claims wherein the concentration of said fatty acid in said air is less than 100 ppm.

11. A method according to any one of the preceding Claims wherein the volume of said air is at least 283m³/min (10,000 SCFM).

12. A process for making poly(vinylchloride) wherein an ammonium salt of lauric acid, palmitic acid, or stearic acid is used as a surfactant in manufacturing a poly(vinylchloride) aqueous emulsion and said aqueous emulsion is sprayed into warm air to dry said polyvinyl(chloride), the process including the step of rendering said air less malodourous by spraying into said air an aqueous solution containing about 2 to about 4 times the amount of a base that is needed to react with any lauric acid, palmitic acid, or stearic acid in said air.

13. A method according to Claim 12 wherein said ammonium salt is ammonium laurate.

14. A method according to Claim 13 wherein said base is sodium carbonate.

15. A method according to Claim 12, 13 or 14 wherein the concentration of said base in said aqueous solution is about 0.2 to about 1.0 wt%.

16. A method according to any one of Claims 12 to 15 wherein said aqueous solution is atomized.

17. A method according to any one of Claims 12 to 16 wherein said base is selected from the group consisting of sodium carbonate, sodium bicarbonate, potassium carbonate, potassium biocarbonate, sodium hydroxide, potassium hydroxide and mixtures thereof.

18. A method according to any one of Claims 12 to 17 wherein the concentration of said lauric acid, palmitic acid, or stearic acid in said air is less than 100 ppm.

19. A method according to any one of Claims 12 to 18 wherein the volume of said warm air is at least 283m³ /min (10,000) SCFM).

20. A method of making poly(vinylchloride) comprising
(A) polymerising vinyl chloride monomer in an emulsion micro-suspension polymerisation process to produce an emulsion containing particles of poly(vinylchloride);
(B) adding ammonium laurate to said emulsion;
(C) spraying said emulsion into warm air, whereby lauric acid is formed;
(D) passing said warm air through a poly(vinyl chloride) drying system; and
(E) spraying into said warm air from said drying system an aqueous solution of about 0.05 to about 1.0 wt% sodium carbonate containing about 2 to about 4 times the amount of sodium carbonate needed to stoichiometrically react with said lauric acid.

## Patentansprüche

1. Verfahren zur Herstellung von Poly(vinylchlorid) unter Verwendung eines C₁₀- bis C₁₈-Fettsäuresalzes, wobei besagtes Poly(vinylchlorid) in Luft getrocknet wird und besagte Luft in die Atmosphäre freigesetzt wird und besagte Luft schlechtriechend ist, wobei das Verfahren den Schritt einschließt, den schlechten Geruch der Luft zu verringern, wobei besagter schlechte Geruch auf dem Vorhandensein von C₁₀- bis C₁₈-Fettsäure in besagter Luft beruht, indem in besagte Luft eine wäßrige Lösung eingesprüht wird, die wenigstens eine stöchiometrische Menge einer Base enthält, die mit besagter C₁₀- bis C₁₈-Fettsäure reagiert, um ein Salz zu erzeugen.

2. Verfahren nach Anspruch 1, **dadurch gekennzeichnet, daß** besagter Geruch auf dem Vorhandensein einer gesättigten aliphatischen C₁₀- bis C₁₄-Fettsäure in besagter Luft beruht.

3. Verfahren nach Anspruch 2, **dadurch gekennzeichnet, daß** besagter Geruch auf dem Vorhandensein von Laurinsäure in besagter Luft beruht.

4. Verfahren nach einem der vorangehenden Ansprüche, **dadurch gekennzeichnet, daß** besagte Base ausgewählt wird aus der Gruppe, die aus Natriumcarbonat, Natriumbicarbonat, Kaliumcarbonat, Kaliumbicarbonat, Natriumhydroxid, Kaliumhydroxid und Mischungen derselben besteht.

5. Verfahren nach Anspruch 4, **dadurch gekennzeichnet, daß** besagte Base Natriumcarbonat ist.

6. Verfahren nach einem der vorangehenden Ansprüche, **dadurch gekennzeichnet, daß** die Konzentration besagter Base in besagter wäßrigen Lösung etwa 0,05 Gew.-% bis etwa Sättigung ist.

7. Verfahren nach Anspruch 6, **dadurch gekennzeichnet, daß** die Konzentration besagter Base in besagter wäßrigen Lösung etwa 0,02 bis etwa 1,0 Gew.-% ist.

8. Verfahren nach einem der vorangehenden Ansprüche, **dadurch gekennzeichnet, daß** die Menge besagter Base etwa 2- bis 4-fach stöchiometrisch ist.

9. Verfahren nach einem der vorangehenden Ansprüche, **dadurch gekennzeichnet, daß** besagte wäßrige Lösung vernebelt wird.

10. Verfahren nach einem der vorangehenden Ansprüche, **dadurch gekennzeichnet, daß** die Konzentration besagter Fettsäure in besagter Luft geringer als 100 ppm ist.

11. Verfahren nach einem der vorangehenden Ansprüche, **dadurch gekennzeichnet, daß** das Volumen besagter Luft wenigstens 283 m³/min (10.000 SCFM) beträgt.

12. Verfahren zur Herstellung von Poly(vinylchlorid), bei dem ein Ammoniumsalz von Laurinsäure, Palmitinsäure oder Stearinsäure als ein Tensid bei der Herstellung einer wäßrigen Poly(vinylchlorid)-Emulsion verwendet wird und besagte wäßrige Emulsion in warme Luft eingesprüht wird, um besagtes Poly(vinylchlorid) zu trocknen, wobei das Verfahren den Schritt einschließt, daß besagte Luft weniger schlechtriechend gemacht wird, indem in besagte Luft eine wäßrige Lösung eingesprüht wird, die das etwa 2- bis etwa 4-fache der Menge einer Base enthält, die benötigt wird, um mit jeglicher Laurinsäure, Palmitinsäure oder Stearinsäure in besagter Luft zu reagieren.

13. Verfahren nach Anspruch 12, **dadurch gekennzeichnet, daß** besagtes Ammoniumsalz Ammoniumlaurat ist.

14. Verfahren nach Anspruch 13, **dadurch gekennzeichnet, daß** besagte Base Natriumcarbonat ist.

15. Verfahren nach Anspruch 12, 13 oder 14, **dadurch gekennzeichnet, daß** die Konzentration besagter Base in besagter wäßriger Lösung etwa 0,2 bis etwa 1,0 Gew.-% ist.

16. Verfahren nach einem der Ansprüche 12 bis 15, **dadurch gekennzeichnet, daß** besagte wäßrige Lösung vernebelt wird.

17. Verfahren nach einem der Ansprüche 12 bis 16, **dadurch gekennzeichnet, daß** besagte Base ausgewählt wird aus der Gruppe, die aus Natriumcarbonat, Natriumbicarbonat, Kaliumcarbonat, Kaliumbicarbonat, Natriumhydroxid, Kaliumhydroxid und Mischungen derselben besteht.

18. Verfahren nach einem der Ansprüche 12 bis 17, **dadurch gekennzeichnet, daß** die Konzentration besagter Laurinsäure, Palmitinsäure oder Stearinsäure in besagter Luft geringer als 100 ppm ist.

19. Verfahren nach einem der Ansprüche 12 bis 18, **dadurch gekennzeichnet, daß** das Volumen besagter warmen Luft wenigstens 283 m³/min (10.000 SCFM) beträgt.

20. Verfahren zur Herstellung von Poly(vinylchlorid), welches umfaßt
(A) Polymerisieren von Vinylchlorid-Monomer in einem Emulsions-Mikrosuspensions-Polymerisationsverfahren, um eine Emulsion herzustellen, die Teilchen aus Pöly(vinylchlorid) enthält;
(B) Zugeben von Ammoniumlaurat zu besagter Emulsion;
(C) Einsprühen besagter Emulsion in warme Luft, wodurch Laurinsäure gebildet wird;
(D) Hindurchleiten besagter warmen Luft durch ein Poly(vinylchlorid)-Trocknungssystem; und
(E) Einsprühen einer wäßrigen Lösung von etwa 0,05 bis etwa 1,0 Gew.-% Natriumcarbonat, die das etwa 2- bis etwa 4-fache der Menge von Natriumcarbonat enthält, die benötigt wird, um stöchiometrisch mit besagter Laurinsäure zu reagieren, in besagte warme Luft aus besagtem Trocknungssystem.

## Revendications

1. Procédé de fabrication de polychlorure de vinyle à l'aide d'un sel d'acide gras en C₁₀ à C₁₈, où ledit polychlorure de vinyle est séché à l'air, ledit air est libéré dans l'atmosphère, et ledit air est malodorant, le procédé comportant une étape de réduction de la mauvaise odeur de l'air, ladite mauvaise odeur étant due à la présence d'acide gras en C₁₀ à C₁₈ dans ledit air, par pulvérisation dans ledit air d'une solution aqueuse contenant une quantité au moins stoechiométrique d'une base qui réagit avec ledit acide gras en C₁₀ à C₁₈ pour produire un sel.

2. Procédé selon la revendication 1 dans lequel ladite odeur est due à la présence d'un acide gras aliphatique saturé en C₁₀ à C₁₄ dans ledit air.

3. Procédé selon la revendication 2 dans lequel ladite odeur est due à la présence d'acide laurique dans ledit air.

4. Procédé selon l'une quelconque des revendications précédentes dans lequel ladite base est choisie dans le groupe constitué par le carbonate de sodium, le bicarbonate de sodium, le carbonate de potassium, le bicarbonate de potassium, l'hydroxyde de sodium, l'hydroxyde de potassium et leurs mélanges.

5. Procédé selon la revendication 4 dans lequel ladite base est le carbonate de sodium.

6. Procédé selon l'une quelconque des revendications précédentes dans lequel la concentration de ladite base dans ladite solution aqueuse est d'environ 0,05% en poids à environ la saturation.

7. Procédé selon la revendication 6 dans lequel la concentration de ladite base dans ladite solution aqueuse est d'environ 0,02 à environ 1,0% en poids.

8. Procédé selon l'une quelconque des revendications précédentes dans lequel la quantité de ladite base est environ 2 à environ 4 fois stoechiométrique.

9. Procédé selon l'une quelconque des revendications précédentes dans lequel ladite solution aqueuse est atomisée.

10. Procédé selon l'une quelconque des revendications précédentes dans lequel la concentration dudit acide gras dans ledit air est inférieure à 100 ppm.

11. Procédé selon l'une quelconque des revendications précédentes dans lequel le débit dudit air est d'au moins 283 m³/mn (10000 SCFM).

12. Procédé de fabrication de polychlorure de vinyle dans lequel un sel d'ammonium de l'acide laurique, l'acide palmitique ou l'acide stéarique est utilisé comme tensioactif dans la fabrication d'une émulsion aqueuse de polychlorure de vinyle et ladite émulsion aqueuse est pulvérisée dans de l'air chaud pour sécher ledit polychlorure de vinyle, le procédé comportant une étape consistant à rendre ledit air moins malodorant en pulvérisant dans ledit air une solution aqueuse contenant environ 2 à environ 4 fois la quantité d'une base qui est nécessaire pour réagir avec l'un quelconque de l'acide laurique, l'acide palmitique ou l'acide stéarique dans ledit air.

13. Procédé selon la revendication 12 dans lequel ledit sel d'ammonium est le laurate d'ammonium.

14. Procédé selon la revendication 13 dans lequel ladite base est le carbonate de sodium.

15. Procédé selon la revendication 12, 13 ou 14 dans lequel la concentration de ladite base dans ladite solution aqueuse est d'environ 0,2 à environ 1,0% en poids.

16. Procédé selon l'une quelconque des revendications 12 à 15 dans lequel ladite solution aqueuse est atomisée.

17. Procédé selon l'une quelconque des revendications 12 à 16 dans lequel ladite base est choisie dans le groupe constitué par le carbonate de sodium, le bicarbonate de sodium, le carbonate de potassium, le bicarbonate de potassium, l'hydroxyde de sodium, l'hydroxyde de potassium et leurs mélanges.

18. Procédé selon l'une quelconque des revendications 12 à 17 dans lequel la concentration dudit acide laurique, acide palmitique ou acide stéarique dans ledit air est inférieure à 100 ppm.

19. Procédé selon l'une quelconque des revendications 12 à 18 dans lequel le débit dudit air chaud est d'au moins 283 m³/mn (10000 SCFM).

20. Procédé de fabrication de polychlorure de vinyle comprenant
(A) la polymérisation d'un monomère de chlorure de vinyle par un procédé de polymérisation en microsuspension en émulsion pour produire une émulsion contenant des particules de polychlorure de vinyle ;
(B) l'ajout de laurate d'ammonium à ladite émulsion ;
(C) la pulvérisation de ladite émulsion dans de l'air chaud, par laquelle de l'acide laurique est formé ;
(D) le passage dudit air chaud à travers un système de séchage du polychlorure de vinyle ; et
(E) la pulvérisation dans ledit air chaud depuis ledit système de séchage d'une solution aqueuse d'environ 0,05 à environ 1,0% en poids de carbonate de sodium contenant environ 2 à environ 4 fois la quantité de carbonate de sodium nécessaire à une réaction stoechiométrique avec ledit acide laurique.
